(19) Europäisches Patentamt
European Patent Office
Office européen des brevets

(11) Veröffentlichungsnummer: **0 051 044**
**B1**

(12) # EUROPÄISCHE PATENTSCHRIFT

(45) Veröffentlichungstag der Patentschrift: **02.05.85**

(51) Int. Cl.⁴: **C 08 G 12/02**, B 01 J 20/22, C 02 F 1/28

(21) Anmeldenummer: **81810420.0**

(22) Anmeldetag: **22.10.81**

(54) **Kationisches Adsorptionsmittel, Verfahren zu seiner Herstellung und seine Verwendung zur Entfernung von anionischen Stoffen aus wässerigen Lösungen.**

(30) Priorität: **28.10.80 CH 8016/80**

(43) Veröffentlichungstag der Anmeldung: **05.05.82 Patentblatt 82/18**

(45) Bekanntmachung des Hinweises auf die Patenterteilung: **02.05.85 Patentblatt 85/18**

(84) Benannte Vertragsstaaten: **AT BE CH DE FR GB IT LI NL SE**

(56) Entgegenhaltungen:
**FR - A - 2 332 362**
**US - A - 2 698 787**
**US - A - 2 901 391**

(73) Patentinhaber: **CIBA-GEIGY AG, Postfach, CH-4002 Basel (CH)**

(72) Erfinder: **Haase, Jaroslav, Helvetierstrasse 15, CH-4125 Riehen (CH)**
Erfinder: **Palmberg, Roger, Dr., Ochsengasse 12, CH-4123 Allschwil (CH)**

**EP 0 051 044 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein kationisches Adsorptionsmittel, das geeignet ist, anionische Stoffe aus wässerigen Lösungen, insbesondere aus Abwässern, wie z.B. Filtraten, Restflotten von Bleich- oder Färbeverfahren, Spül- und Waschwässern, zu entfernen.

Das neue Adsorptionsmittel ist dadurch gekennzeichnet, dass es durch Umsetzung einer

a) Aminoverbindung, die mindestens eine Aminogruppe und mindestens eine gegebenenfalls verätherte, methylolierte Carbamid- oder Thiocarbamidgruppe aufweist oder deren Salz
mit einem
b) gegebenenfalls verätherten Additionsprodukt von Formaldehyd an eine Harnstoff-, Thioharnstoff- oder Amino-1,3,5-Triazinverbindung in einem neutralen bis sauren, wässrigen Medium erhältlich ist.

Die methylolierten Carbamid- oder Thiocarbamidgruppen der Komponente (a) können in verätherter oder vorzugsweise in unverätherter Form vorliegen.

Die Komponenten (a) und (b) enthalten zusammen vorzugsweise mindestens zwei N-Methylolgruppen.

Besonders vorteilhaft ist es, wenn die Adsorptionsmittel mit Aminoverbindungen (a) hergestellt werden, die der Formel

(1) 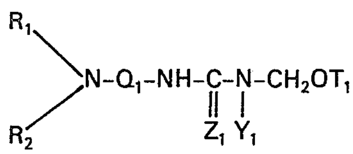

entsprechen.
oder deren Salze, worin

$R_1$ und $R_2$ unabhängig voneinander gegebenenfalls durch Halogen, Hydroxyl, Niederalkoxy oder Cyano substituiertes Niederalkyl, Cycloalkyl, Benzyl oder die Gruppe der Formel

(2) 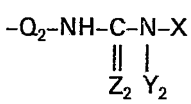

oder

$R_1$ und $R_2$ zusammen mit dem sie verbindenden Stickstoffatom einen fünf- oder sechsgliedrigen heterocyclischen Rest, vorzugsweise Pyrrolidino, Piperidino, Morpholino, Piperazino oder N-Niederalkylpiperazino,

$Q_1$ und $Q_2$ unabhängig voneinander Alkylen mit 2 bis 6 Kohlenstoffatomen und $Q_2$ auch Methylen,

X Wasserstoff oder $-CH_2OT_1$,

$Y_1$ und $Y_2$ unabhängig voneinander Wasserstoff, Niederalkyl oder $-CH_2OT_2$,

$Z_1$ und $Z_2$ unabhängig voneinander Sauerstoff oder Schwefel und

$T_1$ und $T_2$ unabhängig voneinander Wasserstoff oder Niederalkyl bedeuten.

Die N-Methylolcarbamide können als freie Basen, als Säuresalze oder vorzugsweise als quaternäre Ammoniumsalze vorliegen. Als salzbildende Säuren kommen organische oder vor allem anorganische Säuren in Betracht, z.B. Ameisensäure, Essigsäure, Schwefelsäure oder vor allem Salzsäure.

Die Salze entsprechen vorzugsweise der Formel

(3) 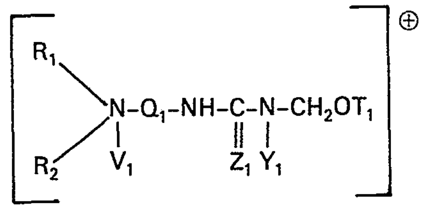 An $^{\ominus}$

worin

$V_1$ Wasserstoff, gegebenenfalls durch Hydroxyl, Halogen, Cyano, Carbamoyl oder Niederalkoxy substituiertes Niederalkyl oder Benzyl, oder

$R_1$, $R_2$ und $V_1$ zusammen mit dem sie verbindenden Stickstoff einen gegebenenfalls durch Niederalkyl substituierten Pyridinring, und

An $\ominus$ das Anion einer organischen oder anorganischen Säure bedeuten und $R_1$, $R_2$, $Q_1$, $Z_1$, $Y_1$ und $T_1$ die angegebene Bedeutung haben.

Dabei sind Verbindungen der Formeln (1) und (3), worin die Substituentenpaare ($R_1$ und $R_2$), ($T_1$ und $T_2$), ($Z_1$ und $Z_2$) und ($Y_1$ und $Y_2$) sowie $CH_2OT_1$ und X, unabhängig voneinander, identisch sind, bevorzugt. Hierzu sind $Z_1$ und $Z_2$ vorzugsweise Sauerstoff und $CH_2OT_1$ und X sind besonders $-CH_2OH$. Bei den Verbindungen der Formel (1) sind $R_1$ und $R_2$ vorzugsweise beide Niederalkyl oder bilden zusammen mit dem sie verbindenden Stickstoffatom einen fünf- oder sechsgliedrigen, gesättigten, heterocyclischen Rest. Bei den Verbindungen der Formel (3) sind $R_1$, $R_2$ und $V_1$ vorzugsweise alle Niederalkyl.

Die unmethylolierten basischen Carbamide oder Thiocarbamide gemäss der Komponente (a) können durch Umsetzung einer entsprechenden N-substituierten Diaminoverbindung, z.B. 3-Dimethylaminopropylamin, mit einer Harnstoff- oder Thioharnstoffverbindung unter Abspaltung von Ammoniak erhalten werden. Die Additionssalze können unter Zugabe einer anorganischen oder organischen Säure zu den freien Aminen erhalten werden.

Die Herstellung der quaternären Salze erfolgt auf übliche Weise durch Umsetzung der basischen Carbamide oder Thiocarbamide mit geeigneten Quaternierungsmitteln. Geeignete Quaternierungsmittel sind z.B. $C_1$-$C_4$-Alkylhalogenide, wie Methyljodid, Methylchlorid, Äthylbromid oder Äthylchlorid. Die-($C_1$-$C_4$-alkyl-)sulfate, wie

Dimethylsulfat oder Diäthylsulfat; Halogencarbonsäureamide, wie Chloracetamid; Halogenalkylnitrile, wie Chloracetonitril; Benzylhalogenide, wie Benzylchlorid und Ester von Sulfonsäuren der Benzolreihe, z.B. die $C_1$–$C_4$-Alkylester, wie die Methyl-, Äthyl-, Propylester der Benzolsulfonsäure, p-Methylbenzolsulfonsäure oder p-Chlorbenzolsulfonsäure.

Die erhaltenen basischen Carbamide oder Thiocarbamide werden vorzugsweise durch Umsetzung mit Formaldehyd oder einer Formaldehyd abgebenden Verbindung, zweckmässig bei Temperaturen von 0 bis 100°C, vorzugsweise 20 bis 90°C methyloliert und gegebenenfalls die erhaltenen Methylolverbindungen mit einem $C_1$–$C_4$-Alkanol, wie z.B. Methanol oder Äthanol, vorzugsweise in Gegenwart einer Säure, wie z.B. Salzsäure oder Phosphorsäure veräthert. Als Formaldehydspender eignen sich vor allem Trioxan, Paraformaldehyd oder Hexamethylentetramin. Die Methylolierung wird gegebenenfalls in Gegenwart eines basischen Katalysators wie Natriumhydroxyd, Natriummethylat oder MgO durchgeführt.

Besonders bevorzugt sind als Komponente (a) Aminoverbindungen, die der Formel

(4) 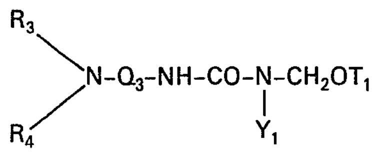

entsprechen oder deren Salze, worin

$R_3$ und $R_4$ unabhängig voneinander Niederalkyl, Benzyl oder die Gruppe der Formel

(5) 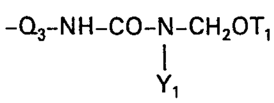

oder $R_3$ und $R_4$ zusammen mit dem sie verbindenden Stickstoffatom einen fünf- oder sechsgliedrigen heterocyclischen Rest und $Q_3$ $C_2$–$C_3$-Alkylen bedeuten und

$T_1$ und $Y_1$ die angegebene Bedeutung haben.

Dabei sind Aminoverbindungen der Formel (4), die nur eine einzige Gruppierung der Formel (5) aufweisen, noch bevorzugter. Hierzu sind $R_3$ und $R_4$ vorzugsweise Niederalkyl, $Y_1$ ist besonders Wasserstoff oder $-CH_2OH$ und $T_1$ ist vorzugsweise Wasserstoff.

Unter den quaternären Ammoniumsalzen der Formel (3) sind die quaternären Ammoniumsalze der Formel

(6) 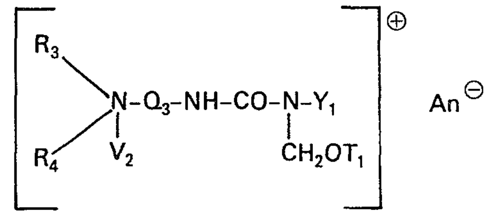

worin $R_3$, $R_4$ und $V_2$ je Niederalkyl bedeuten und $Q_3$, $T_1$, $Y_1$ und $An^\ominus$ die angegebene Bedeutung haben, besonders bevorzugt.

Niederalkyl und Niederalkoxy stellen bei der Definition der Reste der neuen Verbindungen in der Regel solche Gruppen oder Gruppenbestandteile dar, die 1 bis 5, insbesondere 1 bis 3 Kohlenstoffatome aufweisen, wie z.B. Methyl, Äthyl, n-Propyl, Isopropyl, n-Butyl, sek.-Butyl oder Amyl bzw. Methoxy, Äthoxy oder Isopropoxy.

Halogen in Verbindung mit sämtlichen Substituenten bedeutet beispielsweise Fluor, Brom oder vorzugsweise Chlor.

Als besonders interessante Komponenten (a) haben sich basische N-Methylolcarbamide der Formeln

(7) $(CH_3)_2N-CH_2CH_2CH_2-NH-CO-NH-CH_2OH$,

(8) $(CH_3)_2N-CH_2CH_2CH_2-NH-CO-N(CH_2OH)_2$,

(9) $(C_2H_5)_2N-CH_2CH_2-NH-CO-NH-CH_2OH$,

(10) 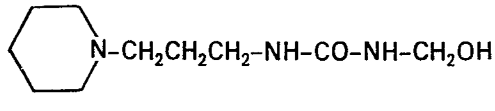

und vor allem die quaternären Ammoniumsalze

(11) $[(CH_3)_3N-(CH_2)_3-NH-CO-N(CH_2OH)_2]^\oplus Cl^\ominus$

(12) 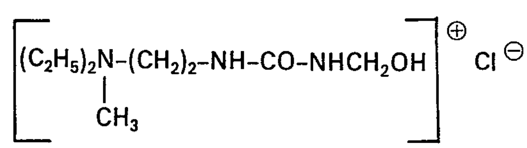

(13) $\left[(CH_3)_3N\text{-}(CH_2)_3\text{-}NH\text{-}CO\text{-}NHCH_2OH\right]^{\oplus} Cl^{\ominus}$

(14) 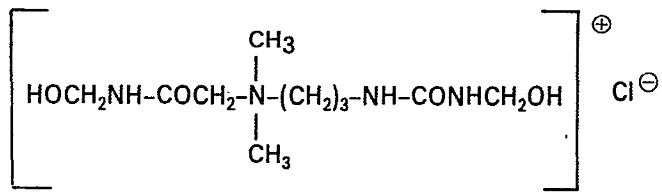

(15) 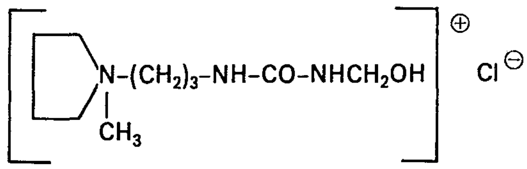

(16) 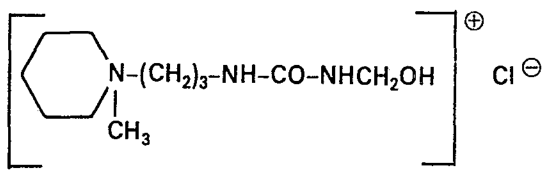

(17) 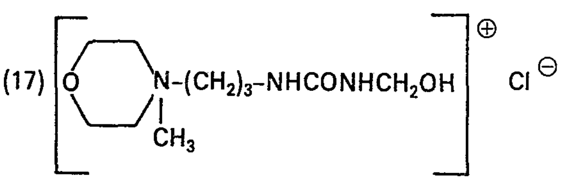

(18) 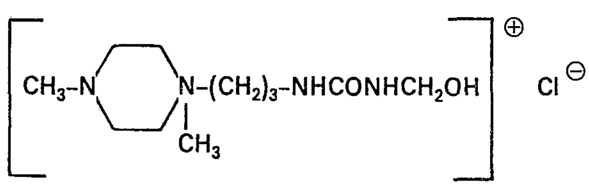

erwiesen.

Geeignete Harnstoff- und Thioharnstoffverbindungen zur Herstellung der Komponenten (b) sind Harnstoff, Thioharnstoff, substituierte Harnstoffe wie Alkyl- oder Arylharnstoffe, Alkylenharnstoffe und -diharnstoffe wie Äthylenharnstoff, Propylenharnstoff, Dihydroxyäthylenharnstoff, Hydroxypropylenharnstoff und Acetylendiharnstoff, ferner Dicyandiamid, Dicyandiamidin, Urone und Hexahydropyrimidone.

Als Amino-1,3,5-triazine seien z.B. genannt: Melamin, N-substituierte Melamine wie z.B. N-Methyl-, N-Äthyl-, N-Propyl- und N-Butyl-melamin, Triazone, Ammelin, Guanamine wie z.B. Benzoguanamin, Acetoguanamin, Diguanamine sowie Guanidine.

Als Additionsprodukte gemäss (b) eignen sich sowohl vorwiegend monomolekulare Verbindungen als auch höher vorkondensierte Produkte.

Wertvolle Produkte liefern im allgemeinen sowohl vollständig als auch nur teilweise methylolierte Produkte, die gegebenenfalls auch veräthert sein können.

Bevorzugt werden die Methylolverbindungen der genannten Harnstoffe und Amino-1,3,5-triazine. Unter diesen Verbindungen sind vor allem N-Methylolharnstoffe und N-Methylolmelamine besonders hervorzuheben. Auch Teiläther derartiger Methylolverbindungen wie z.B. mit Alkanolen von 1 bis 4 Kohlenstoffatomen, wie Methanol, Äthanol, n-Propanol oder n-Butanol können verwendet werden.

Als spezifische Additionsprodukte gemäss (b) seien erwähnt:

N-Methylolharnstoff,
N,N'-Dimethylolharnstoff,
N,N'-Dimethylolharnstoff-dimethyläther,
N,N'-Tetramethylolacetylendiharnstoff,
N,N'-Dimethyloläthylenharnstoff,
N,N'-Dimethylolpropylenharnstoff,
4,5-Dihydroxy-N,N'-dimethyloläthylenharnstoff,
N,N'-Dimethylol-5-hydroxypropylenharnstoff,
4-Methoxy-5,5-dimethyl-N,N'-dimethylolpropylenharnstoff,
N,N'-Dimethylol-5-oxapropylenharnstoff,
N,N'-Dimethylol-thioharnstoff,
4,5-Dihydroxy-N,N'-dimethyloläthylenharnstoff-dimethyläther,

N,N'-Dimethylol-5-oxapropylenharnstoff-dimethyläther, Dimethylolmelamin, Trimethylolmelamin, Tetramethylolmelamin, Hexamethylolmelamin, Hexamethylolmelaminpentamethyläther, Pentamethylolmelamin-di- oder -tris-methyläther, Hexamethylolmelaminhexamethyläther oder -hexaäthyläther.

Darunter sind N-Methylolharnstoff, N,N'-Dimethylolharnstoff, Tris- bis Hexamethylolmelamine besonders bevorzugt.

Es können auch Gemische dieser methylolierten Harnstoff- und Melaminverbindungen verwendet werden.

Die Herstellung der neuen kationischen Adsorptionsmittel erfolgt durch Umsetzen einer

a) Aminoverbindung, die mindestens eine Aminogruppe und mindestens eine gegebenenfalls verätherte, methylolierte Carbamid- oder Thiocarbamidgruppe aufweist, oder deren Salze mit einem

b) gegebenenfalls verätherten Additionsprodukt von Formaldehyd an eine Harnstoff-, Thioharnstoff- oder Amino-1,3,5-Triazinverbindung oder dessen Bildungsgemisch in einem wässrigen, neutralen bis saurem Medium.

Die Umsetzung erfolgt vorzugsweise in einem wässerigen sauren Medium, z.B. bei einem pH-Wert von 2 bis 6 und vorteilhafterweise bei einer Temperatur von 20 bis 200°C, vorzugsweise 50 bis 180°C und insbesondere 60 bis 120°C. Vorzugsweise wird ein Katalysator verwendet.

Bevorzugte Katalysatoren sind anorganische und/oder organische Säuren oder deren Anhydride oder Salze, z.B. schweflige Säure, Schwefelsäure, Sulfaminsäure, Phosphorsäure, Salzsäure, Chloressigsäure, Maleinsäure oder deren Anhydrid, ferner Ammoniumchlorid, Ammoniumnitrat, Ammoniumphosphat, Ammoniumacetat oder Aluminiumsulfat. Besonders bevorzugt ist Sulfaminsäure.

Vorteilhafterweise ist das erfindungsgemässe Absorptionsmittel aus

1 Mol der Komponente (a) und
0,5 bis 10 Mol, vorzugsweise 1,5 bis 3,5 Mol der Komponente (b)

aufgebaut.

Der gesamte Stickstoffgehalt, welcher auch den Amidstickstoff umfasst, beträgt in der Regel mindestens 10 Gew.%, vorzugsweise 15 bis 40 Gew.%.

Das erfindungsgemässe Adsorptionsmittel eignet sich vor allem zur Entfernung von anionischen Stoffen aus wässerigen Lösungen, insbesondere aus Abwässern, wobei die Leistungsfähigkeit des neuen Adsorptionsmittels bedeutend höher ist als diejenige, die mit den herkömmlichen Adsorptionsmitteln erreicht wird. Insbesondere zeichnen sich die neuen Adsorptionsmittel gegenüber den bekannten Mitteln wie z.B. Aktivkohle, durch hohe Aufnahmefähigkeit für in Wasser gelöste oder dispergierte, besonders anionische Stoffe aus.

Gegenstand vorliegender Erfindung ist demnach auch ein Verfahren zur Entfernung von anionischen Stoffen aus wässerigen Lösungen, welches dadurch gekennzeichnet ist, dass man die wässerigen Lösungen mit den erfindungsgemässen kationischen Adsorptionsmitteln in Kontakt bringt.

Dieses Verfahren eignet sich vor allem zur Reinigung von wässerigen Flotten, welche organische anionische Stoffe bzw. deren Gemische enthalten. Insbesondere lassen sich anionische Farbstoffe, Aufheller, Färberei- oder Textilhilfsmittel, Tenside, Gerbstoffe und Mischungen davon sowie auch Huminsäuren in befriedigendem Ausmass den Abwässern entziehen. Erfindungsgemäss können Abwässer, welche Mischungen von anionischen Farbstoffen mit anionischen Hilfsmitteln enthalten, erfolgreich gereinigt werden.

Dank der grossen Anwendungsbreite des neuen Adsorptionsmittels ist es möglich, eine heute immer dringender geforderte Einsparung von Frischwasser durch teilweise bis vollständige Rezirkulation von anfallenden Rest- oder Abfallflotten zu erreichen. Dabei handelt es sich unabhängig von den apparativen Einrichtungen vor allem um die im Zusammenhang mit Färbe-, Bleich-, Wasch- und Gerbeprozessen anfallenden Abwässer der Farbstoff-, Faser-, Textil-, Zellstoff-, Papier- und Lederindustrie. Diese können z.B. im Falle einer Färberei aus den üblichen Färbeapparaturen, wie sie für die Färbung von losem Fasermaterial, von Kammzug, von Garn und Geweben bzw. Gewirken verwendet werden, wie auch aus Reinigungsvorrichtungen z.B. aus einer Breitwaschmaschine, entstammen.

Die Reinigung der Abwässer wird zweckmässig bei 2 bis 150°C vorgenommen. Vorzugsweise erfolgt sie jedoch bei 10 bis 100°C, insbesondere bei 20 bis 70°C. Falls es erwünscht ist, kann die Reinigung der Abwässer auch unter Druck oder Vakuum erfolgen. Der pH-Wert der Abwässer kann in weiten Grenzen variieren, z.B. von 2 bis 12, wobei die quaternären Ammoniumverbindungen insbesondere diejenigen der Formel (6) sogar bis zu einem pH-Wert von 14 ohne wesentlichen Verlust der Kapazität eingesetzt werden können. pH-Korrekturen, z.B. auf einen Wert von 2 bis 9, insbesondere 3 bis 8 können jedoch, je nach der Natur des verwendeten Adsorptionsmittels, das Reinigungsverfahren erleichtern und beschleunigen.

Die Behandlung der Abwässer kann diskontinuierlich, semikontinuierlich oder kontinuierlich durchgeführt werden. Prinzipiell sind im Sinne der Erfindung folgende Ausführungsformen geeignet:

a) sogenanntes Rühr-Verfahren, wobei das zu reinigende Wasser in einem Gefäss oder einer Reihe von Gefässen mit dem Adsorptionsmittel verrührt und dann abgetrennt wird;

b) sogenanntes Fliesbett-Verfahren, in dem das Adsorptionsmittel durch die Strömung der zu reinigenden Flotte im Schwebezustand gehalten wird;
c) sogenanntes Festbett-Verfahren, wobei die zu reinigende Flotte durch ein filterartig angeordnetes Adsorptionsmittel geführt wird.

Falls erwünscht, kann das erfindungsgemäss zu verwendende kationische Adsorptionsmittel mit anderen Ionenaustauschern oder Adsorbentien wie z.B. Aktivkohle und/oder anderen bekannten Filtrationshilfsmitteln, wie z.B. Torf, Kieselgur oder Diatomeenerde vermischt werden. In diesem Falle wird z.B. die Aktivkohle zu dem neuen Adsorptionsmittel in Mengen von 2 bis 95 Gew.%, vorzugsweise 10 bis 70 Gew.%, berechnet auf das Gewicht des kationischen Adsorptionsmittels zugesetzt.

Als Farbstoffe, die erfindungsgemäss aus den Abwässern entfernt werden, können sowohl wasserlösliche als auch in Wasser dispergierte, anionische Farbstoffe oder optische Aufheller in Betracht kommen. Bevorzugt eignet sich das erfindungsgemässe Verfahren zur Entfernung von wasserlöslichen anionischen Farbstoffen oder optischen Aufhellern.

Bei den anionischen Farbstoffen handelt es sich um Farbstoffe, deren anionischer Charakter durch Metallkomplexbildung allein und/oder durch die Wasserlöslichkeit bewirkende saure Substituenten bedingt ist. Als derartige, die Wasserlöslichkeit bewirkende saure Substituenten kommen Carbonsäuregruppen, Phosphorsäuregruppen, acylierte Sulfonsäureimidgruppen, wie Alkyl- oder Aryldisulfimid- bzw. Alkyl- oder Arylcarbonylsulfimidgruppen, Alkyl- oder Arylimidgruppen, Schwefelsäureester- und vor allem Sulfonsäuregruppen in Betracht.

Die anionischen Farbstoffe können den verschiedensten Farbstoffklassen angehören. Beispielsweise seien Oxazin-, Triphenylmethan-, Yanthen-, Nitro-, Acridon-, Stilben-, Perinon-, Naphthochinonimin-, Phthalocyanin-, Anthrachinon- und Azofarbstoffe genannt. Die letzteren können metallfreie, metallisierbare oder metallhaltige Mono-, Dis- und Polyazofarbstoffe, einschliesslich der Formazanfarbstoffe sein, worin das Metallatom einen 1:1- oder 1:2-Komplex, insbesondere 1:2-Chrom- oder 1:2-Kobaltkomplexe bildet, die zwei gleiche oder zwei verschiedene Moleküle Azofarbstoff komplex an ein Chrom- oder Kobaltatom gebunden enthalten. Diese Farbstoffe können im Molekül auch sogenannte reaktive Gruppierungen, welche mit dem zu färbenden Fasermaterial eine kovalente Bindung eingehen, aufweisen.

Das neue Adsorptionsmittel eignet sich nicht nur zur Entfärbung von in der Farbstoff-Fabrikation, Textil- bzw. Papier- bzw. Leder-Färberei anfallenden Restflotten, sondern leistet überdies auch gute Dienste, wenn es darum geht, Reste von anionischen optischen Aufhellern aus Wasch- und Bleichflotten zu entfernen.

Die optischen Aufheller können beliebigen Aufhellerklassen angehören. Bei den anionischen Aufhellern handelt es sich insbesondere um Stilbenverbindungen, Pyrazoline, Dibenzoxazolyl- oder Dibenzimidazolylverbindungen oder Naphthalinsäureimide, welche im Molekül mindestens eine saure Gruppe, wie Carbonsäure- oder vorzugsweise eine Sulfonsäuregruppe aufweisen und faserreaktiv sein können.

Ein weiterer Vorteil des neuen kationischen Adsorptionsmittels beruht darauf, dass es mindestens teilweise nebst den Farbstoffen auch eine Eliminierung von anionischen Tensiden und Textil- und Färbereihilfsmitteln sowie Phosphaten aus wässerigen Restflotten gestattet. Solche Hilfsmittel sind im Buch «Tenside-Textilhilfsmittel-Waschrohstoffe» von Dr. Kurt Lindner (herausgegeben von Wissenschaftlicher Verlagsgesellschaft Stuttgart 1964) näher beschrieben.

Das kationische Adsorptionsmittel kann auch dort Hilfe leisten, wo es sich um Eliminierung von anionischen, synthetischen Gerbstoffen, insbesondere Gerbstoffen, die in dem Molekül eine oder mehrere Sulfogruppen tragen, handelt. Eine nähere Beschreibung dieser Verbindungen befindet sich z.B. in «Ullmanns Encyklopädie der technischen Chemie», Band 11, Seiten 595 bis 598. Das kationische Adsorptionsmittel dient auch als allgemeiner Anionenaustauscher.

Durch geeignete Wahl des Adsorptionsmittels können erfindungsgemäss den Abwässern bis zu 100% der gelösten Verunreinigung entzogen werden. Es können dabei Rückhaltewirkungen bis zu 50 g Reststoff, d.h. Farbstoff, optische Aufheller, Hilfsmittel, Waschmittel, Gerbstoff pro 100 g Adsorptionsmittel erreicht werden. Vorzugsweise werden Restflotten entfärbt, deren Farbstoffkonzentration 0,01 bis 5 g/l und vor allem 0,01 bis 1 g/l beträgt.

In Fällen, in denen es nicht gelingt, eine vollständige Entfärbung bzw. Entfernung von den Reststoffen durch eine einmalige Behandlung der Restflotte mit dem neuen Adsorptionsmittel zu erreichen, empfiehlt es sich, den Reinigungsvorgang zu wiederholen.

Nach der Adsorption der Verunreinigungen lassen sich die beladenen Adsorptionsmittel leicht von dem gereinigten Abwasser abtrennen. Sie weisen einen hohen Feststoffgehalt auf und können deshalb ohne Trocknungsvorgang direkt verbrannt werden. Gewünschtenfalls können Säuresalze auch mit Hilfe z.B. einer verdünnten, wässerigen Natriumhydroxidlösung oder Natriumcarbonatlösung regeneriert werden.

In den folgenden Beispielen sind Prozente immer Gewichtsprozente.

Beispiel 1

51.7 g einer 40%igen, mit konz. Salzsäure auf pH 4,6 gestellten Lösung der Verbindung der Formel

(7) 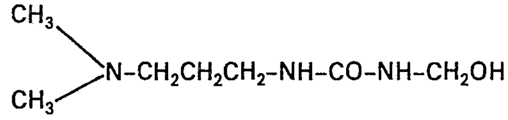

werden mit 26,4 g N,N'-Dimethylolharnstoff versetzt und auf 60°C erwärmt. Zu diesem Gemisch gibt man 10 ml 15%iger Sulfaminsäure, wobei das Reaktionsgemisch erstarrt. Anschliessend erwärmt man während 1½ Stunden unter Rückfluss, giesst das Reaktionsgemisch auf ein Trocknungsblech und kondensiert im Vakuumtrockenschrank bei 85–90°C weiter. Nach 15 Stunden erhält man 41,5 g eines hellgelben, glasartigen Produktes, das zerkleinert und in 2000 ml Wasser aufgenomen wird. Nach 30 Minuten Rühren bei Raumtemperatur wird über einem Tuch filtriert und das Produkt im Vakuumtrockenschrank während 16 Stunden getrocknet. Man erhält 24,0 g eines schwach gelben Pulvers mit einem Stickstoffgehalt von 25,34%.

Beispiele 2 bis 6

Verfährt man wie in Beispiel 1 beschrieben, verwendet jedoch anstelle der dort angegebenen Reaktionspartner jeweils die in der folgenden Tabelle 1 in den 2. und 3. Spalten aufgeführten Ausgangsstoffe in den dort angegebenen Mengen bei pH 7, so erhält man Reaktionsprodukte, die den in der 4. Spalte angegebenen gesamten Stickstoffgehalt aufweisen.

Tabelle 1

| Bsp. | | Aminoplast-Vorkondensat | | Aminoverbindung (40%) | N-Gehalt in % |
|---|---|---|---|---|---|
| | g | | g | | |
| 2 | 19,8 | Monomethylolharnstoff | 51,7 | $(CH_3)_2N-(CH_2)_3-NH-CO-NH-CH_2OH$ | 28,9 |
| 3 | 67,4 | Hexamethylolmelamin | 51,7 | $(CH_3)_2N-(CH_2)_3-NH-CO-NH-CH_2OH$ | 30,5 |
| 4 | 26,4 | N,N'-Dimethylolharnstoff | 75,0 | $(CH_3)_2N-(CH_2)_3-NH-CO-N(CH_2OH)_2$ | 24,6 |
| 5 | 19,8 | Monomethylolharnstoff | 75,0 | $(CH_3)_2N-(CH_2)_3-NH-CO-N(CH_2OH)_2$ | 24,7 |
| 6 | 67,4 | Hexamethylolmelamin | 75,0 | $(CH_3)_2N-(CH_2)_3-NH-CO-N(CH_2OH)_2$ | 30,5 |

Beispiel 7

25,5 g einer Verbindung der Formel

(11) $[(CH_3)_3N-(CH_2)_3-NH-CO-N(CH_2OH)_2]^{\oplus} Cl^{\ominus}$

werden in 30 ml Wasser gelöst und mit konz. Salzsäure auf pH 4,5 gestellt. Dazu gibt man 26,4 g N,N'-Dimethylolharnstoff und erwärmt auf 60°C. Zu diesem Gemisch gibt man 10 ml 15%ige Sulfaminsäure, wobei eine glasklare dünne Suspension entsteht.

Anschliessend erwärmt man während 1½ Stunden auf 80–85°C, giesst das Reaktionsgemisch auf ein Trocknungsblech und kondensiert im Vakuumtrockenschrank bei 85–90°C weiter. Nach 15 Stunden erhält man 42,8 g eines farblosen, glasartigen Produktes, das zerkleinert und in 1500 ml Wasser aufgenommen wird. Nach 30 Minuten Rühren bei Raumtemperatur wird über einem Tuch filtriert und das Produkt im Vakuumtrockenschrank während 15 Stunden bei 85–90°C getrocknet.

Man erhält 23,0 g eines weissen Pulvers mit einem Stickstoffgehalt von 22,9%.

Beispiel 8

Verfährt man wie in Beispiel 7 beschreiben, verwendet jedoch anstelle der dort angegebenen Reaktionstemperatur jeweils die in der folgenden Tabelle 2 in den 2. und 3. Spalten aufgeführten Ausgangsstoffe in den dort angegebenen Mengen bei pH7, so erhält man Reaktionsprodukte, die den in der 4. Spalte angegebenen gesamten Stickstoffgehalt aufweisen.

Tabelle 2

| Bsp. | | Aminoplast-Vorkondensat | | quaternäres Ammoniumsalz | N-Gehalt in % |
|---|---|---|---|---|---|
| | g | | g | | |
| 8 | 53 | N,N'-Dimethylolharnstoff | 48 | $\left[(C_2H_5)_2N(CH_3)-(CH_2)_2-NHCONHCH_2OH\right]^{\oplus} Cl^{\ominus}$ | 24,5 |
| 9 | 86,5 | N,N'-Dimethylolharnstoff | 80 | $\left[(C_2H_5)_2N(CH_3)-(CH_2)_3-NHCONHCH_2OH\right]^{\oplus} Cl^{\ominus}$ | 23,6 |
| 10 | 26,4 | N,N'-Dimethylolharnstoff | 22,3 | $\left[(CH_3)_3N-(CH_2)_3-NHCONHCH_2OH\right]^{\oplus} Cl^{\ominus}$ | 22,9 |

Tabelle 2 (Fortsetzung)

| Bsp. | | Aminoplast-Vorkondensat | | quaternäres Ammoniumsalz | N-Gehalt in % |
|---|---|---|---|---|---|
| | g | | g | | |
| 11 | 47,4 | N,N'-Dimethylolharnstoff-Dimethyläther | 18,2 | $[(CH_3)_3N-(CH_2)_3-NHCONHCH_2OH]^{\oplus} Cl^{\ominus}$ | 25,7 |
| 12 | 43,6 | N,N'-Dimethylolthioharnstoff | 18,2 | $[(CH_3)_3N-(CH_2)_3-NHCONHCH_2OH]^{\oplus} Cl^{\ominus}$ | 30,6 |
| 13 | 41,8 | N,N'-Dimethylol-5-oxapropylenharnstoffdimethyläther | 18,2 | $[(CH_3)_3N-(CH_2)_3-NHCONHCH_2OH]^{\oplus} Cl^{\ominus}$ | 21,2 |
| 14 | 26,4 | N,N'-Dimethylolharnstoff | 29,9 | 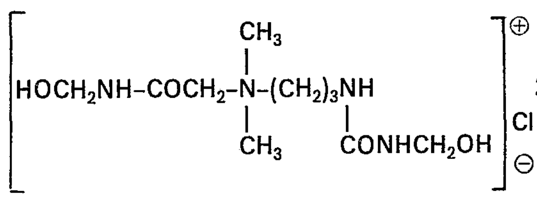 $Cl^{\ominus}$ | 23,8 |
| 15 | 26,4 | N,N'-Dimethylolharnstoff | 25,2 | 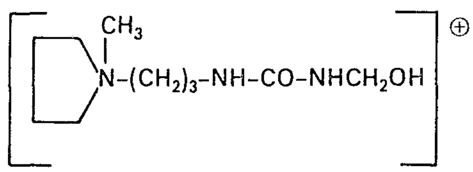 $Cl^{\ominus}$ | 24,7 |
| 16 | 26,4 | N,N'-Dimethylolharnstoff | 26,8 | 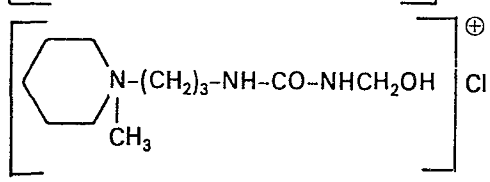 $Cl^{\ominus}$ | 24,3 |
| 17 | 26,4 | N,N'-Dimethylolharnstoff | 26,8 | 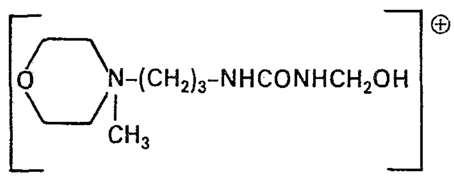 $Cl^{\ominus}$ | 23,1 |
| 18 | 26,4 | N,N'-Dimethylolharnstoff | 28,2 | 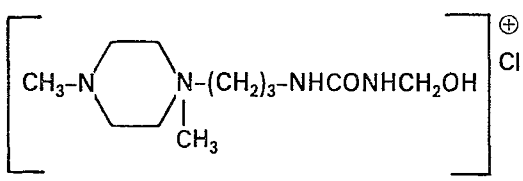 $Cl^{\ominus}$ | 24,0 |

Beispiele 19 bis 36

In einem Dreihalskolben mit Magnetrührer, Kühler und Thermometer werden 500 ml einer auf pH-Wert 7 gestellten 0,1%igen Lösung eines Farbstoffes der Formel

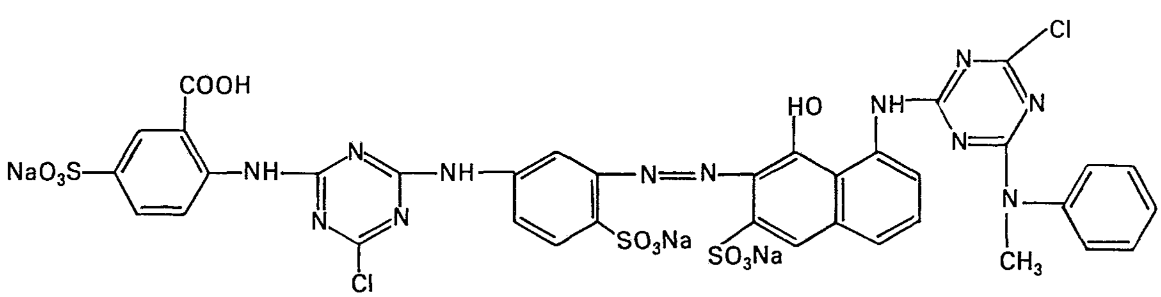

bei 50°C mit jeweils 500 mg der gemäss den Beispielen 1 bis 18 hergestellten Anionenaustauscher in Pulverform versetzt. Bei jedem Versuch wird nach einer Adsorptionsdauer von x Minuten die Aufschlämmung über ein Faltenfilter filtriert und die in der Tabelle 3 angegebene prozentuale Entfärbung des Filtrates ermittelt.

Tabelle 3

| Beispiel | Adsorbens hergestellt gemäss Beispiel | Adsorptionsdauer in Minuten | % Entfärbung |
|---|---|---|---|
| 19 | 1 | 45 | 50 |
| 20 | 2 | 10 | 24 |
| 21 | 3 | 120 | 35 |
| 22 | 4 | 5 | 50 |
| 23 | 5 | 60 | 60 |
| 24 | 6 | 60 | 20 |
| 25 | 7 | 10 | 90 |
| 26 | 8 | 120 | 62 |
| 27 | 9 | 120 | 70 |
| 28 | 10 | 120 | 87 |
| 29 | 11 | 120 | 72 |
| 30 | 12 | 120 | 20 |
| 31 | 13 | 120 | 23 |
| 32 | 14 | 120 | 28 |
| 33 | 15 | 120 | 79 |
| 34 | 16 | 120 | 70 |
| 35 | 17 | 120 | 85 |
| 36 | 18 | 120 | 67 |

**Patentansprüche für die Vertragsstaaten BE, CH, DE, FR, GB, IT, LI, NL, SE**

1. Kationisches Adsorptionsmittel, dadurch gekennzeichnet, dass es durch Umsetzung einer

a) Aminoverbindung, die mindestens eine Aminogruppe und mindestens eine gegebenenfalls verätherte, methylolierte Carbamid- oder Thiocarbamidgruppe aufweist, oder deren Salz
mit einem
b) gegebenenfalls verätherten Additionsprodukt von Formaldehyd an eine Harnstoff-, Thioharnstoff- oder Amino-1,3,5-Triazinverbindung in einem wässerigen, neutralen bis sauren Medium erhältlich ist.

2. Adsorptionsmittel gemäss Anspruch 1, dadurch gekennzeichnet, dass die methylolierte Komponente (a) in unverätherter Form vorliegt.

3. Adsorptionsmittel gemäss einem der Ansprüche 1 und 2, dadurch gekennzeichnet, dass die Komponenten (a) und (b) zusammen mindestens zwei N-Methylolgruppen aufweisen.

4. Adsorptionsmittel gemäss einem der Ansprüche 1 bis 3, dadurch gekennzeichnet, dass die Komponente (a) ein entsprechendes quaternäres Ammoniumsalz ist.

5. Adsorptionsmittel gemäss Anspruch 1, dadurch gekennzeichnet, dass die Komponente (a) eine Aminoverbindung der Formel

(1) 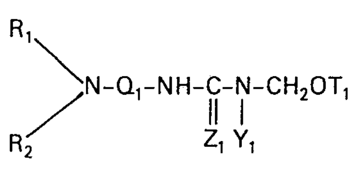

oder deren Salz ist, worin $R_1$ und $R_2$ unabhängig voneinander gegebenenfalls durch Halogen, Hydroxyl, Niederalkoxy oder Cyano substituiertes Niederalkyl, Cycloalkyl, Benzyl oder die Gruppe der Formel

(2) 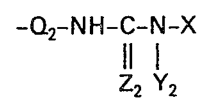

oder
$R_1$ und $R_2$ zusammen mit dem sie verbindenden Stickstoffatom einen fünf- oder sechsgliedrigen heterocyclischen Rest,
$Q_1$ und $Q_2$ unabhängig voneinander Alkylen mit 2 bis 6 Kohlenstoffatomen und $Q_2$ auch Methylen,
X Wasserstoff oder $-CH_2OT_1$,
$Y_1$ und $Y_2$ unabhängig voneinander Wasserstoff, Niederalkyl oder $-CH_2OT_2$,
$Z_1$ und $Z_2$ unabhängig voneinander Sauerstoff oder Schwefel und $T_1$ und $T_2$ unabhängig voneinander Wasserstoff oder Niederalkyl bedeuten.

6. Adsorptionsmittel gemäss Anspruch 5, dadurch gekennzeichnet, dass die Komponente (a) ein quaternäres Ammoniumsalz der Formel

(3) 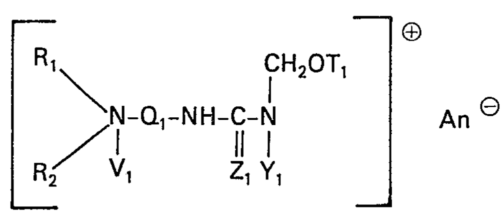

ist, worin

$V_1$ Wasserstoff, gegebenenfalls durch Hydroxyl, Halogen, Cyano, Carbamoyl oder Niederalkoxy substituiertes Niederalkyl oder Benzyl, oder

$R_1$, $R_2$ und $V_1$ zusammen mit dem sie verbindenden Stickstoff einen gegebenenfalls durch Niederalkyl substituierten Pyridinring, und

An⊖ das Anion einer organischen oder anorganischen Säure bedeuten und $R_1$, $R_2$, $Q_1$, $Z_1$, $Y_1$ und $T_1$ die im Anspruch 5 angegebene Bedeutung haben.

7. Adsorptionsmittel gemäss Anspruch 5, dadurch gekennzeichnet, dass die Komponente (a) eine Aminoverbindung der Formel

(4) 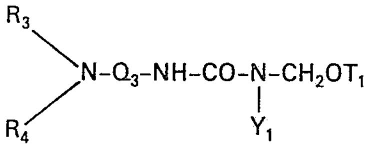

oder deren Salz ist, worin

$R_3$ und $R_4$ unabhängig voneinander Niederalkyl, Benzyl oder die Gruppe der Formel

(5) 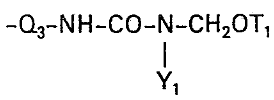

oder $R_3$ und $R_4$ zusammen mit dem sie verbindenden Stickstoffatom einen fünf- oder sechsgliedrigen heterocyclischen Rest und

$Q_3$ $C_2$-$C_3$-Alkylen bedeuten und

$T_1$ und $Y_1$ die in Anspruch 5 angegebene Bedeutung haben.

8. Adsorptionsmittel gemäss Anspruch 7, dadurch gekennzeichnet, dass die Komponente (a) eine Aminoverbindung der Formel (4) oder deren Salz ist, worin $R_3$ und $R_4$ Niederalkyl oder Benzyl bedeuten.

9. Adsorptionsmittel gemäss Anspruch 8, dadurch gekennzeichnet, dass die Komponente (a) eine Aminoverbindung der Formel (4) oder deren Salz ist, worin $R_3$ und $R_4$ Niederalkyl, $Y_1$ Wasserstoff oder $-CH_2OH$ und $T_1$ Wasserstoff bedeuten.

10. Adsorptionsmittel gemäss Anspruch 7, dadurch gekennzeichnet, dass die Komponente (a) ein quaternäres Ammoniumsalz der Formel

(6) 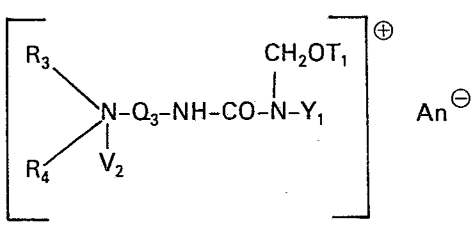

ist, worin $R_3$, $R_4$ und $V_2$ je Niederalkyl bedeuten, $Q_3$, $T_1$ und $Y_1$ die im Anspruch 7 und An⊖ die im Anspruch 6 angegebene Bedeutung haben.

11. Adsorptionsmittel gemäss einem der Ansprüche 1 bis 10, dadurch gekennzeichnet, dass als Komponente (b) methylolierte Harnstoffe oder Amino-1,3,5-triazine, die gegebenenfalls veräthert sind, verwendet werden.

12. Adsorptionsmittel gemäss Anspruch 11, dadurch gekennzeichnet, dass als Komponente (b) N-Methylol-Harnstoffe oder N-Methylolmelamine und vorzugsweise Methylolharnstoff, Dimethylolharnstoff oder Tris- bis Hexamethylolmelamin verwendet werden.

13. Verfahren zur Herstellung eines kationischen Adsorptionsmittels, dadurch gekennzeichnet, dass man

a) eine Aminoverbindung, die mindestens eine Aminogruppe und mindestens eine gegebenenfalls verätherte, methylolierte Carbamid- oder Thiocarbamidgruppe aufweist, oder deren Salz mit einem

b) gegebenenfalls verätherten Additionsprodukt von Formaldehyd an eine Harnstoff-, Thioharnstoff- oder Amino-1,3,5-Triazinverbindung oder dessen Bildungsgemisch in einem wässerigen, neutralen bis sauren Medium umsetzt.

14. Verfahren gemäss Anspruch 13, dadurch gekennzeichnet, dass die Umsetzung in Gegenwart eines Katalysators, vorzugsweise Sulfaminsäure, durchgeführt wird.

15. Verwendung der kationischen Adsorptionsmittel, wie sie in den Ansprüchen 1 bis 12 definiert sind, zur Entfernung von anionischen Stoffen aus wässerigen Lösungen.

**Patentansprüche (für den Vertragsstaat AT)**

1. Verfahren zur Herstellung eines kationischen Adsorptionsmittels, dadurch gekennzeichnet, dass man eine

a) Aminoverbindung, die mindestens eine Aminogruppe und mindestens eine gegebenenfalls verätherte, methylolierte Carbamid- oder Thiocarbamidgruppe aufweist, oder deren Salz mit einem

b) gegebenenfalls verätherten Additionsprodukt von Formaldehyd an eine Harnstoff-, Thioharnstoff- oder Amino-1,3,5-Triazinverbindung

in einem wässerigen, neutralen bis sauren Medium umsetzt.

2. Verfahren gemäss Anspruch 1, dadurch gekennzeichnet, dass die methylolierte Umsetzungs-Komponente (a) in unverätherter Form verwendet wird.

3. Verfahren gemäss einem der Ansprüche 1 und 2, dadurch gekennzeichnet, dass die Umsetzungs-Komponenten (a) und (b) zusammen mindestens zwei N-Methylolgruppen aufweisen.

4. Verfahren gemäss einem der Ansprüche 1 bis 3, dadurch gekennzeichnet, dass als Umsetzungs-Komponente (a) ein entsprechendes quaternäres Ammoniumsalz verwendet wird.

5. Verfahren gemäss Anspruch 1, dadurch gekennzeichnet, dass als Umsetzungs-Komponente (a) eine Aminoverbindung der Formel

(1) 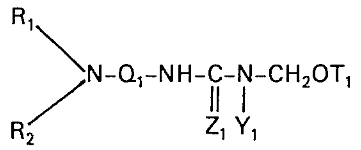

oder deren Salz verwendet wird, worin

$R_1$ und $R_2$ unabhängig voneinander gegebenenfalls durch Halogen, Hydroxyl, Niederalkoxy oder Cyano substituiertes Niederalkyl, Cycloalkyl, Benzyl oder die Gruppe der Formel

(2) 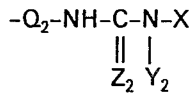

oder

$R_1$ und $R_2$ zusammen mit dem sie verbindenden Stickstoffatom einen fünf- oder sechsgliedrigen heterocyclischen Rest,

$Q_1$ und $Q_2$ unabhängig voneinander Alkylen mit 2 bis 6 Kohlenstoffatomen und $Q_2$ auch Methylen,

X Wasserstoff oder $-CH_2OT_1$,

$Y_1$ und $Y_2$ unabhängig voneinander Wasserstoff, Niederalkyl oder $-CH_2OT_2$,

$Z_1$ und $Z_2$ unabhängig voneinander Sauerstoff oder Schwefel und

$T_1$ und $T_2$ unabhängig voneinander Wasserstoff oder Niederalkyl bedeuten.

6. Verfahren gemäss Anspruch 5, dadurch gekennzeichnet, dass als Umsetzungs-Komponente (a) ein quaternäres Ammoniumsalz der Formel

(3) 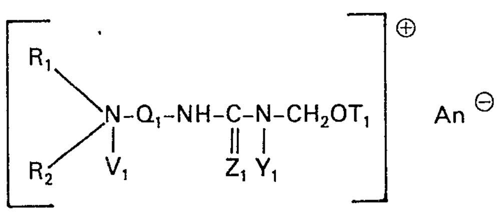

verwendet wird, worin

$V_1$ Wasserstoff, gegebenenfalls durch Hydroxyl, Halogen, Cyano, Carbamoyl oder Niederalkoxy substituiertes Niederalkyl oder Benzyl, oder

$R_1$, $R_2$ und $V_1$ zusammen mit dem sie verbindenden Stickstoff einen gegebenenfalls durch Niederalkyl substituierten Pyridinring und

An⊖ das Anion einer organischen oder anorganischen Säure bedeuten und $R_1$, $R_2$, $Q_1$, $Z_1$, $Y_1$ und $T_1$ die im Anspruch 5 angegebene Bedeutung haben.

7. Verfahren gemäss Anspruch 5, dadurch gekennzeichnet, dass als Umsetzungs-Komponente (a) eine Aminoverbindung der Formel

(4) 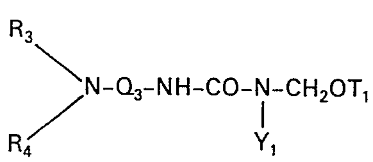

oder deren Salz verwendet wird, worin

$R_3$ und $R_4$ unabhängig voneinander Niederalkyl, Benzyl oder die Gruppe der Formel

(5) 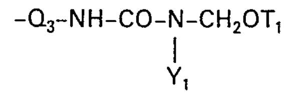

oder $R_3$ und $R_4$ zusammen mit dem sie verbindenden Stickstoffatom einen fünf- oder sechsgliedrigen heterocyclischen Rest und

$Q_3$ $C_2$-$C_3$-Alkylen bedeuten und

$T_1$ und $Y_1$ die in Anspruch 5 angegebene Bedeutung haben.

8. Verfahren gemäss Anspruch 7, dadurch gekennzeichnet, dass als Umsetzungs-Komponente (a) eine Aminoverbindung der Formel (4) oder deren Salz verwendet wird, worin $R_3$ und $R_4$ Niederalkyl oder Benzyl bedeuten.

9. Verfahren gemäss Anspruch 8, dadurch gekennzeichnet, dass als Umsetzungs-Komponente (a) eine Aminoverbindung der Formel (4) oder deren Salz verwendet wird, worin $R_3$ und $R_4$ Niederalkyl, $Y_1$ Wasserstoff der $-CH_2OH$ und $T_1$ Wasserstoff bedeuten.

10. Verfahren gemäss Anspruch 7, dadurch gekennzeichnet, dass als Umsetzungs-Komponente (a) ein quaternäres Ammoniumsalz der Formel

(6) 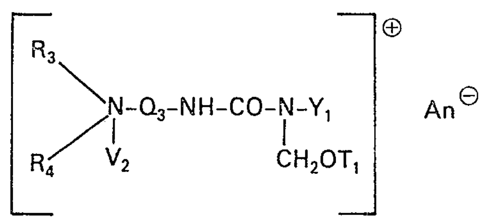

verwendet wird, worin

$R_3$, $R_4$ und $V_2$ je Niederalkyl bedeuten, $Q_3$, $T_1$ und $Y_1$ die im Anspruch 7 und An⊖ die im Anspruch 6 angegebene Bedeutung haben.

11. Verfahren gemäss einem der Ansprüche 1 bis 10, dadurch gekennzeichnet, dass als Umsetzungs-Komponente (b) methylolierte Harnstoffe oder Amino-1,3,5-triazine, die gegebenenfalls veräthert sind, verwendet werden, und von diesen vorzugsweise N-Methylol-Harnstoffe oder N-Methylolmelamine und insbesondere Methylolharnstoff, Dimethylolharnstoff oder Tris-bis-Hexamethylolmelamin gewählt werden.

12. Verfahren gemäss einem der Ansprüche 1 bis 11, dadurch gekennzeichnet, dass die Umsetzung in Gegenwart eines Katalysators, vorzugsweise Sulfaminsäure durchgeführt wird.

**Claims for the Contracting States: BE, CH, DE, FR, GB, IT, LI, NL, SE**

1. A cationic adsorption agent which is obtained by reaction of

a) an amino compound which contains at least one amino group and at least one free or etherified methylolated carbamide or thiocarbamide

group, or a salt thereof,
with
b) a free or etherified adduct of formaldehyde with a urea, thiourea or amino-1,3,5-triazine compound in an aqueous, neutral to acid medium.

2. An adsorption agent according to claim 1, wherein the methylolated component (a) is in free form.

3. An adsorption agent according to either claim 1 or claim 2, wherein components (a) and (b) together contain at least two N-methylol groups.

4. An adsorption agent according to any one of claims 1 to 3, wherein component (a) is a corresponding quaternary ammonium salt.

5. An adsorption agent according to claim 1, wherein component (a) is an amino compound of the formula

(1) 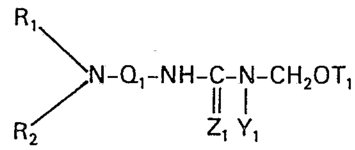

wherein each of $R_1$ and $R_2$ independently is lower alkyl which is unsubstituted or substituted by halogen, hydroxy, lower alkoxy or cyano, or is cycloalkyl, benzyl or the group of the formula

(2) 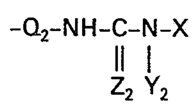

or $R_1$ and $R_2$, together with the nitrogen atom to which they are attached, are a 5- or 6-membered heterocyclic radical; each of $Q_1$ and $Q_2$ independently is alkylene of 2 to 6 carbon atoms and $Q_2$ is also methylene; X is hydrogen or $-CH_2OT_1$; each of $Y_1$ and $Y_2$ independently is hydrogen, lower alkyl or $-CH_2OT_2$; each of $Z_1$ and $Z_2$ independently is oxygen or sulfur; and each of $T_1$ and $T_2$ independently is hydrogen or lower alkyl; or a salt thereof.

6. An adsorption agent according to claim 5, wherein component (a) is a quaternary ammonium salt of the formula

(3) 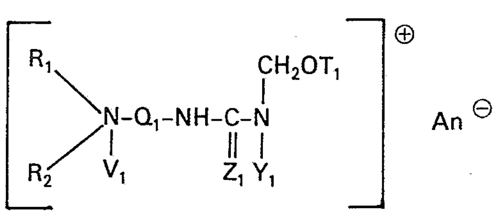

wherein $V_1$ is hydrogen, lower alkyl which is unsubstituted or substituted by hydroxy, halogen, cyano, carbamoyl or lower alkoxy, or is benzyl, or $R_1$, $R_2$ and $V_1$, together with the nitrogen atom to which they are attached, form a pyridine ring which is unsubstituted or substituted by lower alkyl; and An⊖ is the anion of an organic or inorganic acid, and $R_1$, $R_2$, $Q_1$, $Z_1$, $Y_1$ and $T_1$ are as defined in claim 5.

7. An adsorption agent according to claim 5, wherein component (a) is an amino compound of the formula

(4) 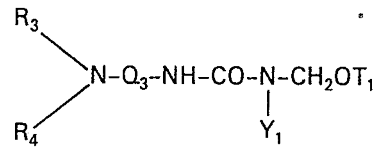

wherein each of $R_3$ and $R_4$ independently is lower alkyl, benzyl or the group of the formula

(5) 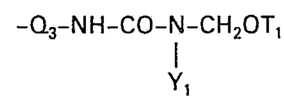

or $R_3$ and $R_4$, together with the nitrogen atom to which they are attached, are a 5- or 6-membered heterocyclic radical and $Q_3$ is $C_2$–$C_3$-alkylene, and $T_1$ and $Y_1$ are as defined in claim 5, or a salt thereof.

8. An adsorption agent according to claim 7, wherein component (a) is an amino compound of the formula (4), wherein $R_3$ and $R_4$ are lower alkyl or benzyl, or a salt thereof.

9. An adsorption agent according to claim 8, wherein component (a) is an amino compound of the formula (4), wherein $R_3$ and $R_4$ are lower alkyl, $Y_1$ is hydrogen or $-CH_2OH$, and $T_1$ is hydrogen, or a salt thereof.

10. An adsorption agent according to claim 7, wherein component (a) is a quaternary ammonium salt of the formula

(6) 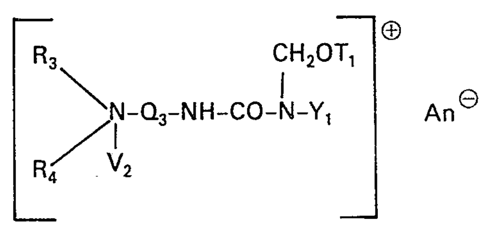

wherein each of $R_3$, $R_4$ and $V_2$ is lower alkyl, $Q_3$, $T_1$ and $Y_1$ are as defined in claim 7, and An⊖ is as defined in claim 6.

11. An adsorption agent according to any one of claims 1 to 10, wherein component (6) is a methylolated urea or amino-1,3,5-triazine, each of which can be etherified.

12. An adsorption agent according to claim 11, wherein component (b) is an N-methylol urea compound or an N-methylolmelamine compound, preferably methylol urea, dimethylol urea or tri- to hexamethylolmelamine.

13. A process for the preparation of a cationic adsorption agent, which process comprises reacting

a) an amino compound which contains at least one amino group and at least one free or etherified methylolated carbamide or thiocarbamide group, or a salt thereof,
with

b) a free or etherified adduct of formaldehyde with a urea, thiourea or amino-1,3,5-triazine compound in an aqueous, neutral to acid medium.

14. A process according to claim 13, wherein the reaction is conducted in the presence of a catalyst, preferably sulfamic acid.

15. Use of a cationic adsorption agent as defined in any one of claims 1 to 12 for removing anionic substances from aqueous solutions.

**Claims for the Contracting State: AT**

1. A process for the preparation of a cationic adsorption agent, which process comprises reacting

a) an amino compound which contains at least one amino group and at least one free or etherified methylolated carbamide or thiocarbamide group, or a salt thereof,
with
b) a free or etherified adduct of formaldehyde with a urea, thiourea or amino-1,3,5-triazine compound in an aqueous, neutral to acid medium.

2. A process according to claim 1, which comprises using the methylolated reaction component (a) in free form.

3. A process according to either claim 1 or claim 2, wherein reaction components (a) and (b) together contain at least two N-methylol groups.

4. A process according to any one of claims 1 to 3, which comprises using as reaction component (a) a corresponding quaternary ammonium salt.

5. A process according to claim 1, which comprises using as reaction component (a) an amino compound of the formula

(1) 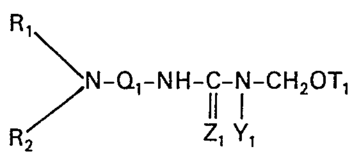

wherein each of $R_1$ and $R_2$ independently is lower alkyl which is unsubstituted or substituted by halogen, hydroxy, lower alkoxy or cyano, or is cycloalkyl, benzyl or the group of the formula

(2) 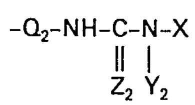

or $R_1$ and $R_2$, together with the nitrogen atom to which they are attached, are a 5- or 6-membered heterocyclic radical; each of $Q_1$ and $Q_2$ independently is alkylene of 2 to 6 carbon atoms and $Q_2$ is also methylene; X is hydrogen or $-CH_2OT_1$; each of $Y_1$ and $Y_2$ independently is hydrogen, lower alkyl or $-CH_2OT_2$; each of $Z_1$ and $Z_2$ independently is oxygen or sulfur; and each of $T_1$ and $T_2$ independently is hydrogen or lower alkyl; or a salt thereof.

6. A process according to claim 5, which comprises using as reaction component (a) a quaternary ammonium salt of the formula

(3) 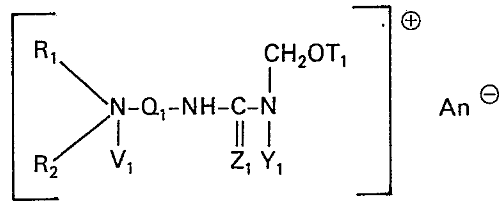

wherein $V_1$ is hydrogen, lower alkyl which is unsubstituted or substituted by hydroxy, halogen, cyano, carbamoyl or lower alkoxy, or is benzyl, or $R_1$, $R_2$ and $V_1$, together with the nitrogen atom to which they are attached, form a pyridine ring which is unsubstituted or substituted by lower alkyl; and An⊖ is the anion of an organic or inorganic acid, and $R_1$, $R_2$, $Q_1$, $Z_1$, $Y_2$ and $T_1$ are as defined in claim 5.

7. A process according to claim 5, which comprises using as reaction component (a) an amino compound of the formula

(4) 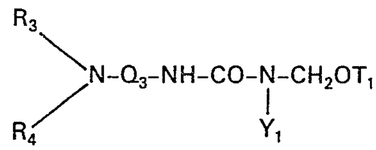

wherein each of $R_3$ and $R_4$ independently is lower alkyl, benzyl or the group of the formula

(5) 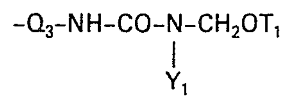

or $R_3$ and $R_4$, together with the nitrogen atom to which they are attached, are a 5- or 6-membered heterocyclic radical and $Q_3$ is $C_2$-$C_3$alkylene, and $T_1$ and $Y_1$ are as defined in claim 5, or a salt thereof.

8. A process according to claim 7, which comprises using as reaction component (a) an amino compound of the formula (4), wherein $R_3$ and $R_4$ are lower alkyl or benzyl, or a salt thereof.

9. A process according to claim 8, which comprises using as reaction component (a) an amino compound of the formula (4), wherein $R_3$ and $R_4$ are lower alkyl, $Y_1$ is hydrogen or $-CH_2OH$, and $T_1$ is hydrogen, or a salt thereof.

10. A process according to claim 7, which comprises using as reaction component (a) a quaternary ammonium salt of the formula

(6) 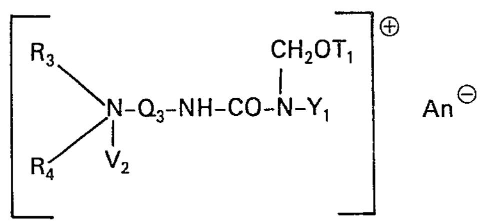

wherein each of $R_3$, $R_4$ and $V_2$ is lower alkyl, $Q_3$,$T_1$ and $Y_1$ are as defined in claim 7, and An⊖ is as defined in claim 6.

11. A process according to any one of claims 1 to 10, which comprises using as reaction component (b) a methylolated urea or amino-1,3,5-triazine, each of which can be etherified, and of these, preferably selecting an N-methylol urea compound or an N-methylolmelamine compound, in particular methylol urea, dimethylol urea or tri- to hexamethylolmelamine.

12. A process according to any one of claims 1 to 11, wherein the reaction is conducted in the presence of a catalyst, preferably sulfamic acid.

**Revendications pour les Etats Contractants: BE, CH, DE, FR, GB, IT, LI, NL, SE**

1. Agent d'adsorption cationique, caractérisé par le fait qu'il est obtenu par réaction

a) d'un composé aminé qui présente au moins un groupe amino et au moins un groupe carbamide ou thiocarbamide méthylolé, éventuellement éthérifié, ou de son sel, avec
b) un produit d'addition éventuellement éthérifié du formaldéhyde sur un composé d'urée, de thio-urée ou d'amino-1,3,5-triazine dans un milieu aqueux, neutre à acide.

2. Agent d'adsorption selon la revendication 1, caractérisé par le fait que le constituant méthylolé (a) est sous une forme non éthérifiée.

3. Agent d'adsorption selon l'une des revendications 1 et 2, caractérisé par le fait que les constituants (a) et (b) présentent ensemble au moins deux groupes N-méthylol.

4. Agent d'adsorption selon l'une des revendications 1 à 3, caractérisé par le fait que le constituant (a) est un sel d'ammonium quaternaire approprié.

5. Agent d'adsorption selon la revendication 1, caractérisé par le fait que le constituant (a) est un composé aminé ayant la formule

(1) 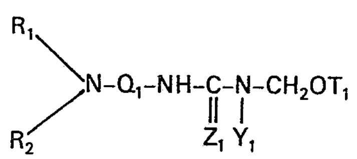

ou son sel, dans laquelle $R_1$ et $R_2$ indépendamment l'un de l'autre sont des groupes alkyle inférieur, cycloalkyle, benzyle, éventuellement substitués par un halogène, un radical hydroxyle, alcoxy inférieur ou cyano, ou bien le groupe de formule

(2) 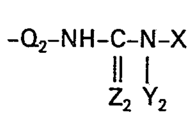

ou bien
$R_1$ et $R_2$ forment ensemble avec l'atome d'azote auquel ils sont liés un reste hétérocyclique pentagonal ou hexagonal;
$Q_1$ et $Q_2$ indépendamment l'un de l'autre sont des groupes alkylène ayant 2 à 6 atomes de carbone, et $Q_2$ est également un groupe méthylène,
X est un atome d'hydrogène ou un groupe $-CH_2OT_1$,
$Y_1$ et $Y_2$ indépendamment l'un de l'autre sont des atomes d'hydrogène des groupes alkyle inférieur ou $-CH_2OT_2$,
$Z_1$ et $Z_2$ indépendamment l'un de l'autre sont des atomes d'oxygène ou de soufre, et
$T_1$ et $T_2$ indépendamment l'un de l'autre sont des atomes d'hydrogène ou des groupes alkyle inférieur.

6. Agent d'adsorption selon la revendication 5, caractérisé par le fait que le constituant (a) est un sel d'ammonium quaternaire de formule

(3) 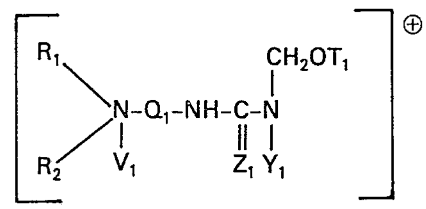 An$^{\ominus}$

dans laquelle
$V_1$ est un atome d'hydrogène, un groupe alkyle inférieur ou benzyle éventuellement substitué par un radical hydroxyle, halogéno, cyano, carbamoyle ou alcoxy inférieur, ou bien
$R_1$, $R_2$ et $V_1$ forment ensemble avec l'atome d'azote auquel ils sont liés un noyau pyridine éventuellement substitué par un groupe alkyle inférieur, et
An$^{\ominus}$ est l'anion d'un acide organique ou minéral, et $R_1$, $R_2$, $Q_1$, $Z_1$, $Y_1$ et $T_1$ ont les significations données dans la revendication 5.

7. Agent d'adsorption selon la revendication 5, caractérisé par le fait que le constituant (a) est un composé aminé ayant la formule

(4) 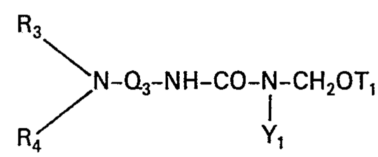

ou bien son sel, dans laquelle $R_3$ et $R_4$ indépendamment l'un de l'autre sont des groupes alkyle inférieur, benzyle, ou le groupe de formule

(5) 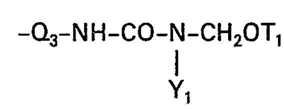

ou bien $R_3$ et $R_4$ forment ensemble avec l'atome d'azote auquel ils sont liés un reste hétérocyclique pentagonal ou hexagonal, et
$Q_3$ est un groupe alkylène en $C_2$–$C_3$, et
$T_1$ et $Y_1$ ont les significations données dans la revendication 5.

8. Agent d'adsorption selon la revendication 7, caractérisé par le fait que le constituant (a) est un composé aminé de formule (4) ou son sel, dans laquelle $R_3$ et $R_4$ sont des groupes alkyle inférieur ou benzyle.

9. Agent d'adsorption selon la revendication 8, caractérisé par le fait que le constituant (a) est un composé aminé de formule (4) ou bien son sel, dans laquelle $R_3$ et $R_4$ sont des groupes alkyle inférieur; $Y_1$ est un atome d'hydrogène ou $-CH_2OH_2$ et $T_1$ est un atome d'hydrogène.

10. Agent d'adsorption selon la revendication 7, caractérisé par le fait que le constituant (a) est un sel d'ammonium quaternaire de formule

(6) 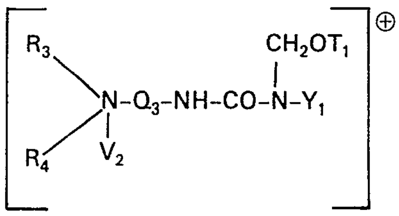 An⊖

dans laquelle $R_3$, $R_4$ et $V_2$ désignent chacun un groupe alkyle inférieur; $Q_3$, $T_1$ et $Y_1$ ont les significations données dans la revendication 7, et An⊖ a la signification donnée dans la revendication 6.

11. Agent d'adsorption selon l'une des revendications 1 à 10, caractérisé par le fait qu'on utilise comme constituant (b) des urées méthylolées ou des amino-1,3,5-triazines méthylolées, qui sont éventuellement éthérifiées.

12. Agent d'adsorption selon la revendication 11, caractérisé par le fait qu'on utilise comme constituant (b) des N-méthylolurées ou des N-méthylolmélamines et de préférence la N-méthylolurée, la diméthylolurée ou la tris- à hexaméthylolmélamine.

13. Procédé pour la préparation d'un agent d'adsorption cationique, caractérisé par le fait qu'on fait réagir

a) un composé aminé qui présente au moins un groupe amino et au moins un groupe carbamide ou thiocarbamide méthylolé éventuellement éthérifié, ou bien son sel, avec
b) un produit d'addition éventuellement éthérifié du formaldéhyde sur un composé d'urée, de thio-urée ou d'amino-1,3,5-triazine ou sur leur mélange de formation, dans un milieu aqueux, neutre à acide.

14. Procédé selon la revendication 13, caractérisé par le fait que la réaction est effectuée en présence d'un catalyseur, de préférence l'acide sulfamique.

15. Utilisation de l'agent d'adsorption cationique tel que défini dans les revendications 1 à 12, pour enlever des solutions aqueuses les substances anioniques.

**Revendiactions pour l'Etat Contractant: AT**

1. Procédé pour la préparation d'un agent d'adsorption cationique, caractérisé par le fait qu'on fait réagir

a) un composé aminé qui présente au moins un groupe amino et au moins un groupe carbamide ou thiocarbamide méthylolé, éventuellement éthérifié ou bien son sel, avec

b) un produit d'addition éventuellement éthérifié du formaldéhyde sur un composé d'urée, de thio-urée ou d'amino-1,3,5-triazine,

dans un milieu aqueux neutre à acide.

1. Procédé selon la revendication 1, caractérisé par le fait que le constituant de réaction (a) méthylolé est utilisé sous une forme non éthérifiée.

3. Procédé selon l'une des revendications 1 et 2, caractérisé par le fait que les constituants (a) et (b) de la réaction présentent ensemble au moins deux groupes N-méthylol.

4. Procédé selon l'une des revendications 1 à 3, caractérisé par le fait qu'on utilise comme constituant (a) de réaction, un sel d'ammonium quaternaire approprié.

5. Procédé selon la revendication 1, caractérisé par le fait qu'on utilise comme constituant (a) de réaction un composé aminé de formule

(1) 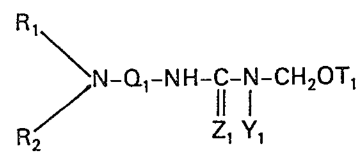

ou son sel, dans laquelle $R_1$ et $R_2$ indépendamment l'un de l'autre sont des groupes alkyle inférieur, cycloalkyle, benzyle, éventuellement substitués par un atome d'halogène, un radicalhydroxyle, alcoxy inférieur ou cyano, ou bien le groupe de formule.

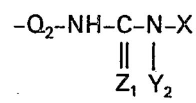

ou bien
$R_1$ et $R_2$ forment ensemble avec l'atome d'azote auquel ils sont liés un reste hétérocyclique pentagonal ou hexagonal;
$Q_1$ et $Q_2$ indépendamment l'un de l'autre sont des groupes alkylène ayant 2 à 6 atomes de carbone et $Q_2$ est également un groupe méthylène,
X est de l'hydrogène ou le groupe $-CH_2OT_1$,
$Y_1$ et $Y_2$ indépendamment l'un de l'autre sont des atomes d'hydrogène, des groupes alkyle inférieur ou $-CH_2OT_2$,
$Z_1$ et $Z_2$ indépendamment l'un de l'autre sont des atomes d'oxygène ou de soufre, et
$T_1$ et $T_2$ indépendamment l'un de l'autre sont des atomes d'hydrogène ou des groupes alkyle inférieur.

6. Procédé selon la revendiction 5, caractérisé par le fait qu'on utilise comme constituant de réaction (a) un sel d'ammonium quaternaire de formule

(3) 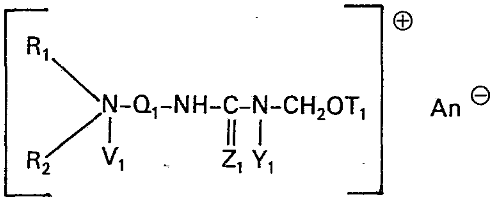

dans laquelle

$V_1$ est un atome d'hydrogène, un groupe alkyle inférieur ou benzyle éventuellement substitué par un radical hydroxyle, halogéno, cyano, carbamoyle ou alcoxy inférieur, ou bien

$R_1$, $R_2$ et $V_1$ forment ensemble avec l'atome d'azote auquel ils sont liés un noyau pyridine éventuellement subsitué par un groupe alkyle inférieur, et

An⊖ désigne l'anion d'un acide organique ou minéral, et $R_1$, $R_2$, $Q_1$, $Z_1$, $Y_1$ et $T_1$ ont les significations données dans la revendication 5.

7. Procédé selon la revendication 5, caractérisé par le fait qu'on utilise comme constituant de réaction (a) un composé aminé de formule

(4) 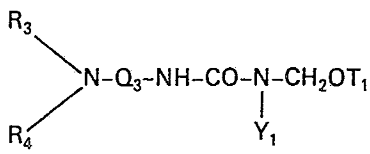

ou son sel, dans laquelle

$R_3$ et $R_4$ indépendamment l'un de l'autre sont des groupes alkyle inférieur, benzyle, ou bien le groupe de formule

(5) 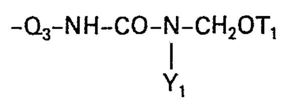

ou bien $R_3$ et $R_4$ forment ensemble avec l'atome d'azote auquel ils sont liés un reste hétérocyclique pentagonal ou hexagonal, et

$Q_3$ et un groupe alkylène en $C_2$-$C_3$, et

$T_1$ et $Y_1$ ont les significations données dans la revendication 5.

8. Procédé selon la revendication 7, caractérisé par le fait qu'on utilise comme constituant de réaction (a) un composé aminé de formule (4), ou son sel, dans lequel $R_3$ et $R_4$ sont des groupes alkyle inférieur ou benzyle.

9. Procédé selon la revendication 8, caractérisé par le fait qu'on utilise comme constituant de réaction (a) un composé aminé de formule (4), ou son sel, dans lequel $R_3$ et $R_4$ sont des groupes alkyle inférieur; $Y_1$ est un atome d'hydrogène ou $-CH_2OH$, et $T_1$ est un atome d'hydrogène.

10. Procédé selon la revendication 7, caractérisé par le fait qu'on utilise comme constituant de réaction (a) un sel d'ammonium quaternaire de formule

(6) 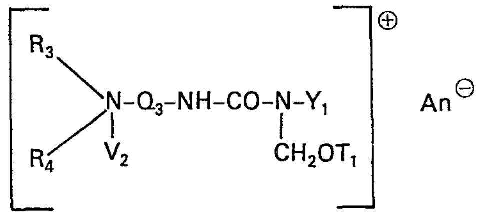

dans laquelle $R_3$, $R_4$ et $V_2$ désignent chacun un groupe alkyle inférieur; $Q_3$, $T_1$ et $Y_1$ ont les significations données dans la revendication 7, et An⊖ a la signification donnée dans la revendication 6.

11. Procédé selon l'une des revendications 1 à 10, caractérisé par le fait qu'on utilise comme constituant de réaction (b) des urées méthylolées ou des amino-1,3,5-triazines méthylolées, qui sont éventuellement éthérifiés, et parmi lesquels on préfère les N-méthylolurées ou les N-méthylolmélamines, et en particulier la méthylolurée, la diméthylolurée ou la tris- à hexaméthylolmélamine.

12. Procédé selon l'une des revendications 1 à 11, caractérisé par le fait que la réaction est effectuée en présence d'un catalyseur, de préférence en présence d'acide sulfamique.